# EUROPEAN PATENT SPECIFICATION

(11) **EP 2 677 704 B1**
(45) Date of publication and mention of the grant of the patent: **09.12.2015**
(21) Application number: 11858476.2
(22) Date of filing: 21.06.2011
(51) Int. Cl.: H04L 12/70, H04L 12/28, H04L 12/46

(54) **UNICAST DATA FRAME TRANSMISSION METHOD AND APPARATUS**
UNICAST-DATENRAHMENÜBERTRAGUNGSVERFAHREN UND VORRICHTUNG
PROCÉDÉ ET APPAREIL DE TRANSMISSION DE TRAMES DE DONNÉES À DESTINATION UNIQUE

(30) Priority: 14.02.2011 CN 201110038001
(43) Date of publication of application: 25.12.2013
(73) Proprietor: ZTE Corporation, Shenzhen, Guangdong 518057 (CN)
(72) Inventor: ZHAI, Hongjun, Shenzhen, Guangdong 518057 (CN); ZHAO, Jingjing, Shenzhen, Guangdong 518057 (CN); CHENG, Mingjiang, Shenzhen, Guangdong 518057 (CN); LV, Erchun, Shenzhen, Guangdong 518057 (CN)
(74) Representative: Chimini, Francesco
(86) International application number: PCT/CN2011/076074
(87) International publication number: WO 2012/109837

(56) References cited:
- WO-A1-2010/111142
- CN-A- 101 827 009
- CN-A- 102 075 438

## Description

### Technical Field

The present invention relates to the field of communications, and in particular to a method and an apparatus for transmitting a unicast data frame.

### Background

TRILL (Transparent Interconnection of Lots of Links) is a Layer 2 (L2) network standard recommended by the IETF (Internet Engineering Task Force) for solving deficiencies of the STP (Spanning Tree protocol) in a large data center. In an L2 network, the STP avoids loops by blocking redundancy links, but at the same time also causes waste of bandwidth of the redundancy links (the redundancy links being blocked). TRILL solves the L2 loop problem by introducing the IS-IS (Intermediate System to Intermediate System) routing protocol into the L2 network, and at the same time remains multiple path (or referred to as ECMP, Equivalent Cost Multiple Path) in the L2 network.

In the TRILL network, a device which operates the TRILL protocol is referred to as a Routing Bridge (RBridge). At the ingress of the TRILL network, the RBridge, which is responsible for encapsulating a unicast data frame of an end system into a TRILL format (i.e., adding a TRILL header and an external frame header in front of the original data frame, wherein the encapsulated data frame is referred to as a TRILL data frame) and injecting the encapsulated data frame into the TRILL network, is referred to as Ingress (which may be referred to as ingress RBridge). At the egress of the TRILL network, the RBridge, which is responsible for decapsulating the TRILL data frame into the original data frame and forwarding the original data frame to the end system, is referred to as Egress (which may be referred to as egress RBridge). Except the Ingress and Egress, other RBridges are responsible for transmitting a TRILL unicast data frame from the Ingress to the Egress hop by hop, and this kind of RBridges is referred to as transmitting RBridge.

In the TRILL network, the RBridge can learn intra-domain L2 network topology by way of exchanging topology information and calculate L2 paths to any RBridge, which also include multiple equivalent cost paths (i.e., ECMP path) to the same RBridge. Multiple-Path improves the redundancy and reliability of the network and lays a foundation for the improvement of the network bandwidth utilization ratio. However, the TRILL protocol does not specify how the transmitting RBridge shall select a forwarding path from multiple paths. While for other existing L2 forwarding technologies, since there is no Multiple-Path in the same VLAN (Virtual Local Area Network), there is not the problem of how to select a path from multiple paths.

According to the TRILL protocol, after receiving the TRILL unicast data frame, the transmitting RBridge removes the external frame header and parses the TRILL header of the frame to obtain Egress information, and then queries a ECMP forwarding table according to the Egress to obtain the next hop RBridge on the forwarding path, and then appends the external frame header and forwards the TRILL unicast data frame to the next hop RBridge. That is, the transmitting RBridge selects the ECMP forwarding path merely according to the Egress information in the TRILL header, so it is not enough for the RBridge to realize load sharing among multiple paths.

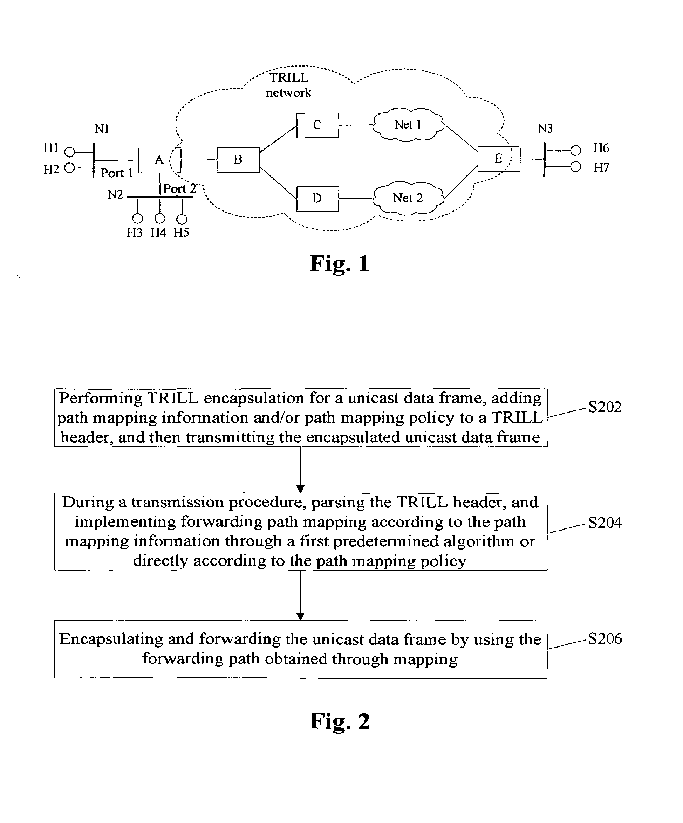

In the network as shown in Fig. 1, A, B, ..., E are RBridges, H1, H2, ..., H7 are end systems, N1, N2 and N3 are Ethernet, and Net1 (i.e. subnet set 1) and Net2 (subnet set 2) are some subnet sets in the TRILL network. Assuming that H1 sends a unicast data frame to H6 and H3 sends a unicast data frame to H7, after these two data frames arrive at A, A performs TRILL encapsulation on them (wherein the Egress is E), and then forwards the encapsulated data frames to B. As a transmitting RBridge, after receiving these TRILL data frames, B parses TRILL headers and knows that the Egress is E, and then queries its ECMP forwarding table to obtain a forwarding path to E. If two forwarding paths are available and there is no other auxiliary information, there are three forwarding manners for B to forward these frames: 1, forwarding these data frames to C; 2, forwarding these data frames to D; 3, or forwarding part of the data frames to C and forwarding the other part of the data frames to D. The former two manners will make the other available path idle, resulting in bandwidth waste. The third manner may cause frames misordering or even retransmission. For example, the first batch of data frames sent by H1 arrive at H6 after passing through C→Net1→E, and the second batch of data frames arrive at H6 after passing through D->Net2->E. If the network delay time of Net2 is greater than that of Net1 and the second batch of data frames arrive at H6 first, it may cause frame misordering or even retransmission (if the difference between the network delay time of Net2 and that of Net1 is large enough, the frame arriving first will be discarded and thus cause retransmission). Since the traffic of the data center is huge, frequent misordering and retransmission will severely affect the network quality.

CN 101827009 A, and WO 2010/111142 A1 provide respective technical solutions; however, the above mentioned problem still remains unsolved.

### Summary

The present invention provides a method and an apparatus for transmitting a unicast data frame so as to solve at least one of the above-mentioned problems.

According to one aspect of the present invention, a method for transmitting a unicast data frame is provided, including: performing Transparent Interconnection of Lots of Links (TRILL) encapsulation for a unicast data frame, adding path mapping information and/or path mapping policy to a TRILL header, and transmitting the encapsulated unicast data frame; during a transmission procedure, parsing the TRILL header, and implementing forwarding path mapping according to the path mapping information through a first predetermined algorithm or directly according to the path mapping policy; and encapsulating and forwarding the unicast data frame by using a forwarding path obtained through the forwarding path mapping.

The path mapping information and/or path mapping policy are added to an options field of the TRILL header and encapsulated as one or more hop-by-hop options having non-critical attributes in a format of Type, Length and Value (TLV).

The path mapping information includes at least one of the following: a destination Media Access Control (MAC) address of the unicast data frame, a source MAC address of the unicast data frame, a numerical value obtained by operating the destination MAC address of the unicast data frame and/or the source MAC address of the unicast data frame using a specific algorithm, a Port ID of a receiving port of the unicast data frame, a Flow ID; and the first predetermined algorithm includes: getting modulus of the path mapping information by using the number of paths.

After parsing the TRILL header, if the path mapping information and/or path mapping policy are not found, the method further includes: continuing to parse an internal frame header to obtain path mapping key information; querying an Equivalent Cost Multiple Path (ECMP) forwarding table according to Egress information in the TRILL header to obtain all available paths to the Egress; mapping the path mapping key information to one of the available paths through a second predetermined algorithm; and encapsulating and forwarding the unicast data frame by using a forwarding path obtained through the mapping.

The path mapping key information includes at least one of the following: an internal-layer source MAC address, an internal-layer destination MAC address, virtual local area network (VLAN) information, a receiving interface Port ID; and the second predetermined algorithm includes: hashing an internal-layer MAC address and getting modulus of the hashing result by using the number of paths.

After querying the ECMP forwarding table according to the Egress information in the TRILL header to obtain all the available paths to the Egress, the method further includes: ranking all the available paths according to a predetermined rule, wherein the predetermined rule includes: a descending or ascending order of a MAC address of a next hop.

According to another aspect of the present invention, an apparatus for transmitting a unicast data frame is provided, including: an encapsulation and transmission module, configured to perform Transparent Interconnection of Lots of Links (TRILL) encapsulation for a unicast data frame, add path mapping information and/or path mapping policy to a TRILL header, and transmit the encapsulated unicast data frame; a TRILL parsing module, configured to, during a transmission procedure, parse the TRILL header, and implement forwarding path mapping according to the path mapping information through a first predetermined algorithm or directly according to the path mapping policy; and an encapsulation and forwarding module, configured to encapsulate and forward the unicast data frame by using a forwarding path obtained through mapping.

The encapsulation and transmission module is further configured to add the path mapping information and/or path mapping policy in an options field of the TRILL header, and encapsulate the path mapping information and/or path mapping policy as one or more hop-by-hop options having non-critical attributes in a format of Type, Length and Value (TLV).

The path mapping information includes at least one of the following: a destination Media Access Control (MAC) address of the unicast data frame, a source MAC address of the unicast data frame, a numerical value obtained by operating the destination MAC address of the unicast data frame and/or the source MAC address of the unicast data frame using a specific algorithm, a Port ID of a receiving port of the unicast data frame, a Flow ID; and the first predetermined algorithm includes: getting modulus of the path mapping information by using the number of paths.

The apparatus further includes: an internal parsing module, configured to, after parsing the TRILL header, if the path mapping information and/or path mapping policy are not found, continue to parse an internal frame header to obtain path mapping key information; a path obtaining module, configured to query an Equivalent Cost Multiple Path (ECMP) forwarding table according to Egress information in the TRILL header to obtain all available paths to the Egress; and a path mapping module, configured to map the path mapping key information to one of the available paths through a second predetermined algorithm.

The path mapping key information includes at least one of the following: an internal-layer source MAC address, an internal-layer destination MAC address, virtual local area network (VLAN) information, a receiving interface Port ID; and the second predetermined algorithm includes: hashing an internal-layer MAC address and getting modulus of the hashing result by using the number of paths.

The apparatus further includes: a path ranking module, configured to rank all the available paths according to a predetermined rule, wherein the predetermined rule includes: a descending or ascending order according to a MAC address of a next hop.

By way of the present invention, the solution of adding path mapping information and/or path mapping policy to a TRILL header and correspondingly enhancing the unicast TRILL data frame parsing flow of the transimitting RBridge is applied to solve the problem of bandwidth waste and frame misordering or even retransmission, thereby achieving the effects of being able to map the forwarding path and share network load among multiple paths and improving the network bandwidth utilization ratio.

### Brief Description of the Drawings

Drawings, provided for further understanding of the disclosure and forming a part of the specification, are used to explain the disclosure together with embodiments of the disclosure rather than to limit the disclosure. In the drawings:
Fig. 1 is a schematic diagram of a Multiple Path topology in a TRILL network;
Fig. 2 is a flowchart of a method for transmitting a unicast data frame according to an embodiment of the present invention;
Fig. 3 is a schematic diagram of the encapsulation format of a TRILL header according to an embodiment of the present invention;
Fig. 4 is a flowchart of a method for transmitting a unicast data frame according to a preferred embodiment of the present invention;
Fig. 5 is a forwarding path processing flowchart of a unicast data frame at the Ingress according to an example of the present invention;
Fig. 6 is a path mapping flowchart of a unicast data frame at a transmitting RBridge according to an example of the present invention;
Fig. 7 is a structural block diagram of an apparatus for transmitting a unicast data frame according to an embodiment of the present invention; and
Fig. 8 is a structural block diagram of an apparatus for transmitting a unicast data frame according to a preferred embodiment of the present invention.

### Detailed Description of the Embodiments

The disclosure is described below with reference to the accompanying drawings and embodiments in detail. Note that, the embodiments of the disclosure and the features of the embodiments can be combined with each other if there is no conflict.

Fig. 2 is a flowchart of a method for transmitting a unicast data frame according to an embodiment of the present invention. As shown in Fig. 2, the method for transmitting a unicast data frame according to the embodiment of the present invention includes:

Step S202, TRILL encapsulation is performed for a unicast data frame, path mapping information and/or path mapping policy are added to a TRILL header, and the encapsulated unicast data frame is transmitted;

Step S204, during a transmission procedure, the TRILL header is parsed, and forwarding path mapping is implemented according to the path mapping information through a first predetermined algorithm or directly according to the path mapping policy; and

Step S206, the unicast data frame is encapsulated and forwarded by using a forwarding path obtained through mapping.

The above-mentioned method, by way of adding the path mapping information and/or path mapping policy to the TRILL header and correspondingly enhancing the unicast TRILL data frame (i.e. unicast data frame subjected to the TRILL encapsulation) parsing flow of the transmitting RBridge, solves the problems of bandwidth waste and frame misordering or even retransmission due to uncertain forwarding path, thereby achieving the effects of being able to map the forwarding path and share network load among multiple paths and improving the network bandwidth utilization ratio. During specific implementation, it can be selected according to practical needs to implement the mapping by using the path mapping information in cooperation with a corresponding algorithm, or directly according to the path mapping policy.

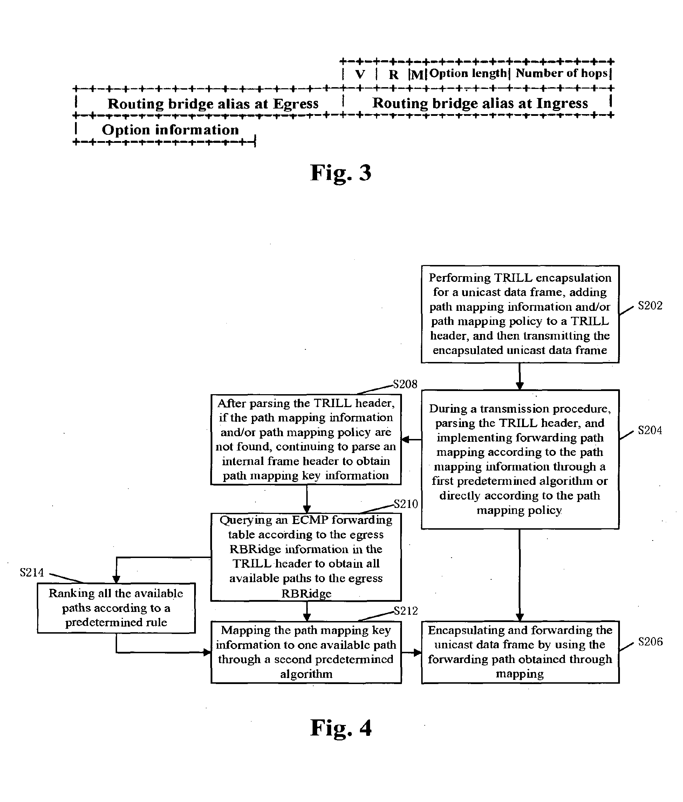

Preferably, as shown in Fig. 3, the above-mentioned path mapping information and/or path mapping policy may be added to an options (i.e. option information) field of the TRILL header, and encapsulated as one or more hop-by-hop options having non-critical (also referred to as non-mandatory) attributes in the format of TLV (TLV is a coding manner, and TLV represent Type, Length and Value respectively).

For the sake of extensibility, in the embodiment of present invention, the path mapping information and/or path mapping policy are preferably added to the options field of the TRILL header and encapsulated as one or more hop-by-hop options having non-critical attributes in the format of TLV.

Preferably, the path mapping information may include at least one of the following: a destination MAC address (also abbreviated as MAC) of the unicast data frame, a source MAC address of the unicast data frame, a numerical value obtained by operating the destination MAC address of the unicast data frame and/or the source MAC address of the unicast data frame using a specific algorithm, a Port ID of a receiving port of the unicast data frame, a Flow ID; and the first predetermined algorithm includes: getting modulus of the path mapping information by using the number of paths.

During specific implementation, the path mapping information and the first predetermined algorithm may be extended according to actual needs so as to achieve different purposes.

Preferably, as shown in Fig. 4, in Step S204, after parsing the TRILL header, if the path mapping information and/or path mapping policy are not found, the method may include the following processing of:
Step S208, continuing to parse an internal frame header to obtain path mapping key information;
Step S210, querying an ECMP forwarding table according to Egress information in the TRILL header to obtain all available paths to the Egress;
Step S212, mapping the path mapping key information to one of the available paths through a second predetermined algorithm; and
finally turning to Step S206, i.e., encapsulating and forwarding the unicast data frame by using a forwarding path obtained through mapping.

The above-mentioned Steps further enhance the parsing flow of the TRILL data frame. If the path mapping information and/or path mapping policy are not found, the internal frame header is further parsed to obtain the path mapping key information and complete path mapping, which further enhances the transmission reliability.

Note that, the process of completing forwarding path mapping according to the path mapping information through the first predetermined algorithm is quite similar to the above-mentioned process, and the difference lies in that the forwarding path mapping is completed according to the path mapping key information through the second predetermined algorithm in the above-mentioned process.

Preferably, the path mapping key information may include at least one of the following: an internal-layer source MAC address, an internal-layer destination MAC address, VLAN information and a receiving interface Port ID; and the second predetermined algorithm may include: hashing the internal-layer MAC address and getting modulus of the hash result by using the number of paths.

Likewise, during specific implementation, the above-mentioned path mapping key information and second predetermined algorithm may be extended according to actual needs.

Preferably, as shown in Fig. 4, after Step S210, the method may further include:
Step S214, all the available paths are ranked according to a predetermined rule, wherein the predetermined rule includes: a descending or ascending order according to a MAC address of the next hop.

Before mapping, all the available paths are sorted, and all the available paths are ranked according to different rules, which may greatly improve the mapping efficiency and can find the required path more rapidly. The specification of the ranking rules may be changed flexibly according to actual situations.

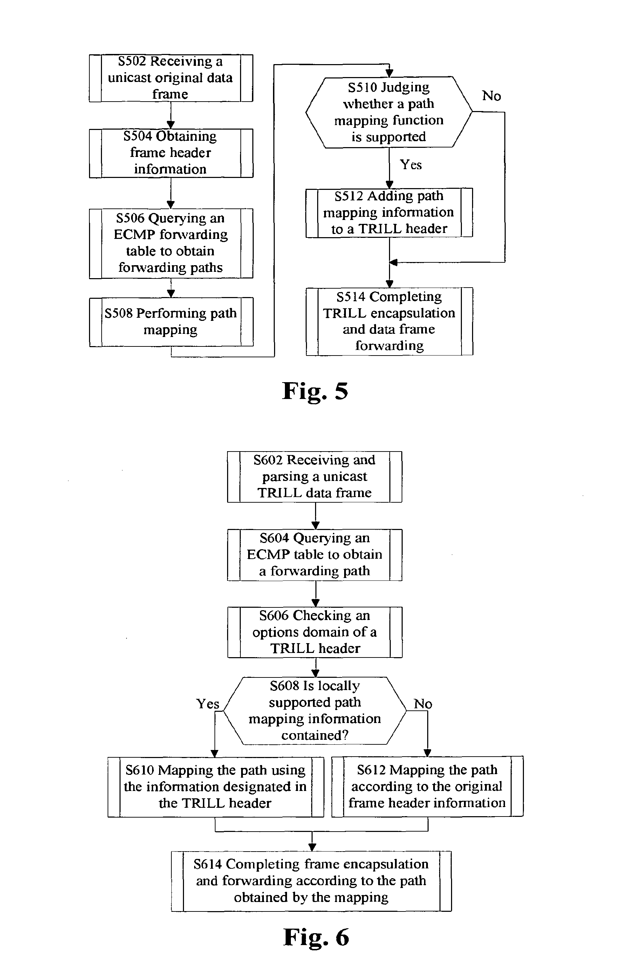

Hereinafter, the above-mentioned preferred embodiments will be described in detail in conjunction with examples and Figs. 5 and 6.

In this example, a solution of completing mapping using path mapping information in cooperation with a corresponding algorithm is utilized, and the following processing is mainly performed for a unicast data frame.
(1) A unicast data frame is received and parsed. Specifically, the data frame is parsed after being received. For a TRILL unicast data frame, Egress information and path mapping information are extracted (including extracting from the options field of the TRILL header or extracting from the internal-layer frame header). For an original data frame, the destination MAC address and VLAN information are extracted.
(2) Forwarding paths are obtained by querying an ECMP table. Specifically, all forwarding paths which can arrive at the destination are obtained by querying the ECMP table or MAC address table according to the Egress information, or the destination MAC address and VLAN information in the internal-layer frame header.
(3) Path mapping is performed. Specifically, the forwarding paths obtained in processing (2) are mapped using the path mapping information extracted from processing (1), to select one forwarding path therefrom.
(4) The data frame is encapsulated and forwarded. Specifically, the encapsulation of the data frame received in processing (1) is completed using the forwarding path selected in processing (3), and then the data frame is forwarded according to the selected forwarding path.

Specifically, as shown in Fig. 5, the processing flow of the original data frame by the Ingress mainly includes the following steps.

Step S502, a unicast original data frame is received, necessary validity check on the data frame is performed by a RBridge after receiving the unicast data frame, an illegal data frame is discarded, and a legal data frame is further processed.

Step S504, frame header information is obtained. Specifically, the legal data frame received in Step S502 is parsed to obtain the information (such as, a destination MAC address, a source MAC address, a VLAN, etc.) in the frame header or information which may be useful in path mapping (i.e. path mapping information) such as a Port ID of a receiving port or a Flow ID of a data flow to which the data frame belongs.

Step S506, forwarding paths are obtained by querying an L2 forwarding table. Specifically, all available forwarding paths are obtained by querying an ECMP forwarding table using the destination MAC address and the VLAN information (or information such as Flow ID and VLAN and so on) obtained in Step S504.

Step S508, path mapping is performed. Specifically, available forwarding paths are mapped through the first predetermined algorithm (for example, after hashing the destination MAC address, getting modulus of the hash value by using the number of available paths) by using the path mapping information obtained in Step S504, and one forwarding path is selected.

Step S510, it is judged whether the path mapping function is supported. Specifically, it is determined, by querying device function information, whether the local (Ingress) supports the path mapping function of options manner, if yes, proceeding to Step S512, otherwise, proceeding to Step S514.

Step S512, path mapping information is added to the TRILL header. Specifically, one or more non-critical hop-by-hop options are added, in the format of TLV, to the options field of the TRILL header, wherein the options include some or all of the path mapping information in Step S504.

Step S514, TRILL encapsulation and data frame forwarding are completed. Specifically, the TRILL encapsulation of the original data frame is completed by using the forwarding path selected in Step S508, and the data frame is forwarded according to the selected forwarding path.

As shown in Fig. 6, the processing flow of the unicast data frame by the transmitting RBridge mainly includes the following steps.

Step S602, a unicast TRILL data frame is received and parsed. Specifically, after a TRILL data frame is received, the data frame is parsed to extract Egress information and path mapping information.

Step S604, forwarding paths are obtained by querying an ECMP table. Specifically, all forwarding paths which may arrive at the destination are obtained by querying the ECMP table according to the Egress information, or the destination MAC address and VLAN information in the internal-layer frame header.

Step S606, the options domain of the TRILL header is checked. Specifically, the options domain is traversed to obtain path mapping relevant options.

Step S608, it is judged whether locally supported path mapping information is contained, if yes, proceeding to Step S610, otherwise, proceeding to Step S612.

Step S610, the paths are mapped using the information designated in the TRILL header. Specifically, the paths in Step S604 are mapped using a certain locally supported path mapping option designated in the TRILL header to obtain one forwarding path, and then proceed to Step S614.

Step S612, the paths are mapped according to the original frame header information. Specifically, the frame header information of the original frame is parsed, the forwarding paths obtained in Step S604 are mapped using the information in the frame header (such as the destination MAC address or source MAC address or VLAN information) through a predefined mapping algorithm (for example, getting modulus of the hash value using the number of available paths after hashing the destination MAC address), and one forwarding path is selected.

Taking the example listed in the Background as an example, when the MAC address of H6 and the MAC address of H7 are hashed respectively, as long as their hash results have different parities, B will send to C (or D) the unicast data frame which is to be sent to H6, and send to D (or C) the data frame which is to be sent to H7, thus realizing load sharing among multiple paths.

Step S614, frame encapsulation and forwarding are completed according to the mapped path. Specifically, re-encapsulation of the TRILL data frame is completed according to the forwarding path selected through the path mapping, and the data frame is forwarded according to the selected forwarding path.

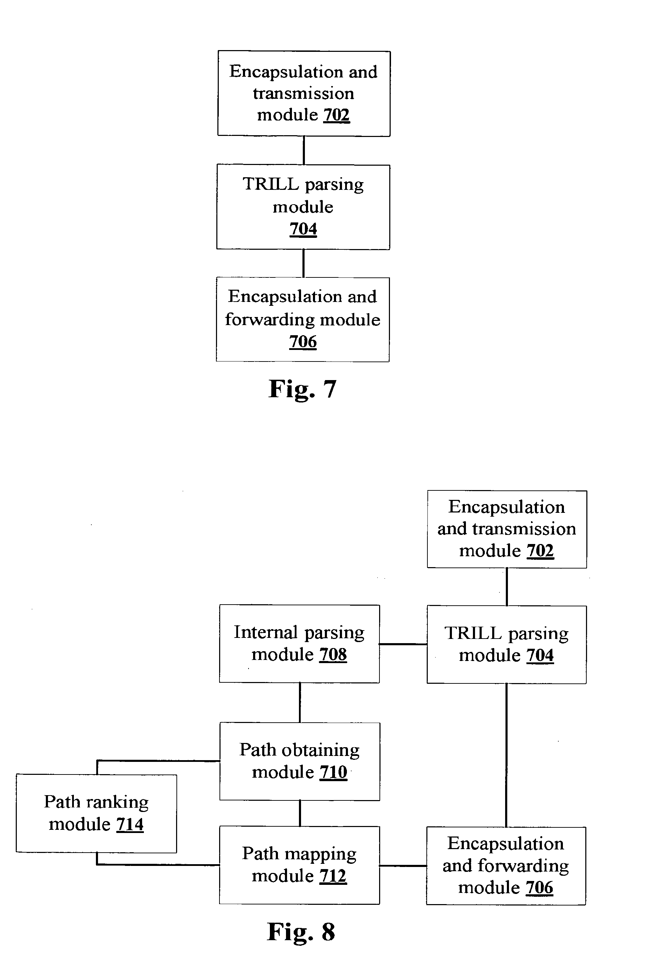

Fig. 7 is a structural block diagram of an apparatus for transmitting a unicast data frame according to an embodiment of the present invention. As shown in Fig. 7, the apparatus for transmitting a unicast data frame according to an embodiment of the present invention includes:
an encapsulation and transmission module **702,** configured to perform TRILL encapsulation for a unicast data frame, add path mapping information and/or path mapping policy to a TRILL header, and then transmit the encapsulated unicast data frame (i.e. TRILL data frame);
a TRILL parsing module **704,** coupled with the encapsulation and transmission module **702** and configured to, during a transmission procedure, parse the TRILL header, and implement forwarding path mapping according to the path mapping information through a first predetermined algorithm or directly according to the path mapping policy; and
an encapsulation and forwarding module **706** coupled with the TRILL parsing module **704** and, configured to encapsulate and forward the unicast data frame by using the forwarding path obtained through mapping.

The above-mentioned apparatus is deployed in a RBridge. By way of adding path mapping information and/or path mapping policy to the TRILL header during unicast data frame transmission and correspondingly enhancing the unicast TRILL data frame parsing flow of the transmitting RBRidge, the problems of bandwidth waste and frame misording or even retransmission due to the forwarding path being uncertain is solved, and the effects of being able to map the forwarding path and share network load among multiple paths and improving the network bandwidth utilization ratio is achieved.

Preferably, the encapsulation and transmission module **702** is further configured to add the path mapping information and/or path mapping policy to an options field of the TRILL header and encapsulate the path mapping information and/or path mapping policy as one or more hop-by-hop options having non-critical attributes in the format of TLV.

For the sake of extensibility, the encapsulation and transmission module **702** will add the path mapping information and/or path mapping policy to the options field of the TRILL header and encapsulate the same as one or more hop-by-hop options having non-critical attributes in the format of TLV.

Preferably, the path mapping information may include at least one of the following: a destination MAC address of the unicast data frame, a source MAC address of the unicast data frame, a numerical value obtained by operating the destination MAC address of the unicast data frame and/or the source MAC address of the unicast data frame using a specific algorithm, a Port ID of a port which receives the unicast data frame, and a Flow ID; and the first predetermined algorithm may include: getting modulus of the path mapping information by using the number of paths.

During specific implementation, the path mapping information and the first predetermined algorithm may be extended according to actual needs so as to achieve different purposes.

Preferably, the apparatus for transmitting a unicast data frame according to a preferred embodiment of the present invention may further include:
an internal parsing module **708,** coupled with the TRILL parsing module **704** and configured to, after the TRILL header is parsed, when the path mapping information and path mapping policy are not found, continue to parse an internal frame header to obtain path mapping key information;
a path obtaining module **710,** coupled with the internal parsing module **708** and configured to query an ECMP forwarding table according to the Egress information in the TRILL header to obtain all available paths to the Egress; and
a path mapping module **712,** coupled with the path obtaining module **710** and configured to map the path mapping key information to one available path through a second predetermined algorithm.

When the path mapping information and/or path mapping policy are not found in the TRILL header, the above-mentioned modules can further parse the internal frame header to obtain path mapping key information and complete path mapping, which further enhances the transmission reliability.

Note that, when implementing the path mapping, the function of the TRILL parsing module **704** is very similar to that of the above-mentioned modules, and the difference merely lies in the difference between the path mapping information and the path mapping key information and the difference between the first predetermined algorithm and the second predetermined algorithm. Of course, the first predetermined algorithm and the second predetermined algorithm may be the same algorithm.

Preferably, the path mapping key information may include at least one of the following: an internal-layer source MAC address, an internal-layer destination MAC address, VLAN information and receiving interface Port ID; and the second predetermined algorithm may include: hashing the internal-layer MAC address and getting modulus of the hash result by using the number of paths.

Likewise, during specific implementation, the above-mentioned path mapping key information and second predetermined algorithm may be extended according to actual needs.

Preferably, the apparatus for transmitting a unicast data frame according to a preferred embodiment of the present invention may further include:
a path ranking module **714,** coupled with the path obtaining module **710** and configured to rank all the available paths according to a predetermined rule, wherein the predetermined rule includes: a descending or ascending order according to a MAC address of the next hop.

Before performing path mapping, the path mapping module **712** may sort the available paths using the path ranking module **714** first. Specifically, the path ranking module **714** may rank all the available paths according to different rules, which may greatly improve the mapping efficiency of the path mapping module **712** and find the required path more rapidly. Moreover, the specification of the ranking rules may be changed flexibly according to the actual situations.

It can be seen from the above description that the present invention propose a method of path selection and load sharing among ECMP multiple paths by way of enhancing the unicast TRILL data frame parsing flow of the transmitting RBridge and/or adding path mapping information (and/or policy) to the options filed of the TRILL header. Compared to the existing L2 path selection technology, the present invention has the following advantages: 1) realizing load sharing among available L2 multiple paths; 2) avoiding problems such as frame misordering, frame loss and retransmission and so on while realizing Multiple Path load sharing; 3) the extensibility is good, different path mapping manners and load sharing granularities may be realized by way of adding different path mapping information and policies to the options field, for example, different flows may be mapped to different paths by adding a Flow ID. In addition, enhancing the flow of parsing the unicast TRILL data frame by the transmitting RBridge in the present invention merely needs to be implemented by the RBridge locally, which does not involve other RBridge, does not need to modify the TRILL protocol, and is completely compatible with the standard TRILL protocol.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations.

## Claims

1. A method for transmitting a unicast data frame, **characterized by** comprising:
in a Transparent Interconnection of Lots of Links (TRILL) network, an ingress RBridge performing TRILL encapsulation for a unicast data frame, adding path mapping information and/or path mapping policy to a TRILL header, and transmitting the encapsulated unicast data frame;
during a transmission procedure, the ingress RBridge parsing the TRILL header, and implementing forwarding path mapping according to the path mapping information through a first predetermined algorithm or directly according to the path mapping policy; and
the ingress RBridge encapsulating and forwarding the unicast data frame by using a forwarding path obtained through the forwarding path mapping.

2. The method according to claim 1, **characterized in that** the path mapping information and/or path mapping policy are added to an options field of the TRILL header and encapsulated as one or more hop-by-hop options having non-critical attributes in a format of Type, Length and Value (TLV).

3. The method according to claim 2, **characterized in that**
the path mapping information comprises at least one of the following: a destination Media Access Control (MAC) address of the unicast data frame, a source MAC address of the unicast data frame, a numerical value obtained by operating the destination MAC address of the unicast data frame and/or the source MAC address of the unicast data frame using a specific algorithm, a Port ID of a receiving port of the unicast data frame, a Flow ID; and
the first predetermined algorithm comprises: getting modulus of the path mapping information by using the number of paths.

4. The method according to any one of claims 1 to 3, **characterized in that** after the ingress RBridge parsing the TRILL header, if the path mapping information and/or path mapping policy are not found, the method further comprises:
the ingress RBridge continuing to parse an internal frame header to obtain path mapping key information;
the ingress RBridge querying an Equivalent Cost Multiple Path (ECMP) forwarding table according to Egress information in the TRILL header to obtain all available paths to the Egress;
the ingress RBridge mapping the path mapping key information to one of the available paths through a second predetermined algorithm; and
the ingress RBridge encapsulating and forwarding the unicast data frame by using a forwarding path obtained through the mapping.

5. The method according to claim 4, **characterized in that**
the path mapping key information comprises at least one of the following: an internal-layer source MAC address, an internal-layer destination MAC address, virtual local area network (VLAN) information, a receiving interface Port ID; and
the second predetermined algorithm comprises: hashing an internal-layer MAC address and getting modulus of the hashing result by using the number of paths.

6. The method according to claim 5, **characterized in that** after the ingress RBridge querying the ECMP forwarding table according to the Egress information in the TRILL header to obtain all the available paths to the Egress, the method further comprises:
the ingress RBridge ranking all the available paths according to a predetermined rule, wherein the predetermined rule comprises: a descending or ascending order of a MAC address of a next hop.

7. An ingress RBridge for use in a Transparent Interconnection of Lots of Links (TRILL) network for transmitting a unicast data frame, **characterized by** comprising:
an encapsulation and transmission module (702), configured to perform TRILL encapsulation for a unicast data frame, add path mapping information and/or path mapping policy to a TRILL header, and transmit the encapsulated unicast data frame;
a TRILL parsing module (704), configured to, during a transmission procedure, parse the TRILL header, and implement forwarding path mapping according to the path mapping information through a first predetermined algorithm or directly according to the path mapping policy; and
an encapsulation and forwarding module (706), configured to encapsulate and forward the unicast data frame by using a forwarding path obtained through mapping.

8. The apparatus according to claim 7, **characterized in that** the encapsulation and transmission module (702)is further configured to add the path mapping information and/or path mapping policy in an options field of the TRILL header, and encapsulate the path mapping information and/or path mapping policy as one or more hop-by-hop options having non-critical attributes in a format of Type, Length and Value (TLV).

9. The apparatus according to claim 8, **characterized in that**
the path mapping information comprises at least one of the following: a destination Media Access Control (MAC) address of the unicast data frame, a source MAC address of the unicast data frame, a numerical value obtained by operating the destination MAC address of the unicast data frame and/or the source MAC address of the unicast data frame using a specific algorithm, a Port ID of a receiving port of the unicast data frame, a Flow ID; and
the first predetermined algorithm comprises: getting modulus of the path mapping information by using the number of paths.

10. The apparatus according to any one of claims 7 to 9, **characterized by** further comprising:
an internal parsing module (708), configured to, after parsing the TRILL header, if the path mapping information and/or path mapping policy are not found, continue to parse an internal frame header to obtain path mapping key information;
a path obtaining module (710), configured to query an Equivalent Cost Multiple Path (ECMP) forwarding table according to Egress information in the TRILL header to obtain all available paths to the Egress; and
a path mapping module (712), configured to map the path mapping key information to one of the available paths through a second predetermined algorithm.

11. The apparatus according to claim 10, **characterized in that**
the path mapping key information comprises at least one of the following: an internal-layer source MAC address, an internal-layer destination MAC address, virtual local area network (VLAN) information, a receiving interface Port ID; and
the second predetermined algorithm comprises: hashing an internal-layer MAC address and getting modulus of the hashing result by using the number of paths.

12. The apparatus according to claim 11, **characterized by** further comprising:
a path ranking module (714), configured to rank all the available paths according to a predetermined rule, wherein the predetermined rule comprises: a descending or ascending order according to a MAC address of a next hop.

## Patentansprüche

1. Verfahren zum Übertragen eines Unicast-Datenrahmens, **dadurch gekennzeichnet, dass** es umfasst:
in einem TRILL- (Transparent Interconnection of Lots of Links) Netzwerk eine Ingress-RBridge, die die TRILL-Verkapselung für einen Unicast-Datenrahmen durchführt, Pfadabbildungsinformationen und/oder eine Pfadabbildungsstrategie zu einem TRILL-Anfangsblock hinzufügt und den verkapselten Unicast-Datenrahmen überträgt;
wobei die Ingress-RBridge während eines Übertragungsverfahrens den TRILL-Anfangsblock parst und gemäß den Pfadabbildungsinformationen durch einen ersten vorgegebenen Algorithmus oder direkt gemäß der Pfadabbildungsstrategie eine Weiterleitungspfadabbildung implementiert; und
wobei die Ingress-RBridge den Unicast-Datenrahmen unter Verwendung eines Weiterleitungspfads, der durch die Weiterleitungspfadabbildung erhalten wird, verkapselt und weiterleitet.

2. Verfahren nach Anspruch 1, **dadurch gekennzeichnet, dass** die Pfadabbildungsinformationen und/oder die Pfadabbildungsstrategie zu einem Optionenfeld des TRILL-Anfangsblocks hinzugefügt werden und als eine oder mehrere Hop-by-Hop-Option/en mit unkritischen Attributen in einem Format von Typ, Länge und Wert (TLV) verkapselt werden.

3. Verfahren nach Anspruch 2, **dadurch gekennzeichnet, dass**
die Pfadabbildungsinformationen wenigstens eines der folgenden umfassen: eine Zielmedienzugangssteuerungs- (MAC-) Adresse des Unicast-Datenrahmens, eine Quell-MAC-Adresse des Unicast-Datenrahmens, einen numerischen Wert, der durch eine Operation der Ziel-MAC-Adresse des Unicast-Datenrahmens und/oder der Quell-MAC-Adresse des Unicast-Datenrahmens unter Verwendung eines spezifischen Algorithmus, einer Port-ID eines Empfangsports des Unicast-Datenrahmens, einer Fluss-ID erhalten wird; und
wobei der erste vorgegebene Algorithmus umfasst:
Erhalten des Modulo der Pfadabbildungsinformationen unter Verwendung der Anzahl von Pfaden.

4. Verfahren nach einem der Ansprüche 1 bis 3, **dadurch gekennzeichnet, dass** das Verfahren, nach dem Parsen des TRILL-Anfangsblocks durch die Ingress-RBridge, wenn die Pfadabbildungsinformationen und/oder die Pfadabbildungsstrategie nicht ermittelt werden, ferner umfasst:
Parsen eines internen Rahmenanfangsblocks durch die Ingress-RBridge, um Pfadabbildungsschlüsselinformationen zu erhalten;
Abfragen einer ECMP- (Equivalent Cost Multiple Path) Weiterleitungstabelle gemäß Egress-Informationen in dem TRILL-Anfangsblock, um alle verfügbaren Pfade zu dem Egress zu erhalten;
Abbilden der Pfadabbildungsschlüsselinformationen auf einen der verfügbaren Pfade mittels eines zweiten vorgegebenen Algorithmus durch die Ingress-RBridge; und
Verkapseln und Weiterleiten des Unicast-Datenrahmens unter Verwendung eines durch die Abbildung erhaltenen Weiterleitungspfads durch die Ingress-RBridge.

5. Verfahren nach Anspruch 4, **dadurch gekennzeichnet, dass**
die Pfadabbildungsschlüsselinformationen wenigstens eines der Folgenden umfassen: eine Zwischenschicht-Quell-MAC-Adresse, eine Zwischenschicht-Ziel-MAC-Adresse, Informationen über das virtuelle lokale Netzwerk (VLAN), eine Empfangsschnittstellenport-ID; und
der zweite vorgegebene Algorithmus umfasst:
Hashen einer Zwischenschicht-MAC-Adresse und Erhalten des Modulo des Hashen einer Zwischenschicht-MAC-Adresse und Erhalten des Modulo des Hash-Ergebnisses unter Verwendung der Anzahl von Pfaden.

6. Verfahren nach Anspruch 5, **dadurch gekennzeichnet, dass** das Verfahren, nachdem die Ingress-RBridge die ECMP-Weiterleitungstabelle gemäß den Egress-Informationen in dem TRILL-Anfangsblock abfragt, um alle verfügbaren Pfade zu dem Egress zu erhalten, ferner umfasst: Einordnen aller verfügbarer Pfade gemäß einer vorgegebenen Regel durch die Ingress-RBridge, wobei die vorgegebene Regel umfasst: eine fallende oder steigende Reihenfolge einer MAC-Adresse eines nächsten Hops bzw. Knotens.

7. Ingress-RBridge für die Verwendung in einem TRILL- (Transparent Interconnection of Lots of Links) zum Übertragen eines Unicast-Datenrahmens, **dadurch gekennzeichnet, dass** sie umfasst:
ein Verkapselungs- und Übertragungsmodul (702), das konfiguriert ist, um die TRILL-Verkapselung für einen Unicast-Datenrahmen durchzuführen, Pfadabbildungsinformationen und/oder eine Pfadabbildungsstrategie zu einem TRILL-Anfangsblock hinzuzufügen und den verkapselten Unicast-Datenrahmen zu übertragen;
ein TRILL-Parsermodul (704), das konfiguriert ist, um während eines Übertragungsverfahrens den TRILL-Anfangsblock zu parsen und gemäß den Pfadabbildungsinformationen durch einen ersten vorgegebenen Algorithmus oder direkt gemäß der Pfadabbildungsstrategie eine Weiterleitungspfadabbildung zu implementieren; und
ein Verkapselungs- und Weiterleitungsmodul (706), das konfiguriert ist, um den Unicast-Datenrahmen unter Verwendung eines Weiterleitungspfads, der durch die Abbildung erhalten wird, zu verkapseln und weiterzuleiten.

8. Vorrichtung nach Anspruch 7, **dadurch gekennzeichnet, dass** das Verkapselungs- und Übertragungsmodul (702) ferner konfiguriert ist, um die Pfadabbildungsinformationen und/oder die Pfadabbildungsstrategie in einem Optionenfeld des TRILL-Anfangsblocks hinzuzufügen und die Pfadabbildungsinformationen und/oder die Pfadabbildungsstrategie als eine oder mehrere Hop-by-Hop-Option/en mit unkritischen Attributen in einem Format von Typ, Länge und Wert (TLV) zu verkapseln.

9. Vorrichtung nach Anspruch 8, **dadurch gekennzeichnet, dass**
die Pfadabbildungsinformationen wenigstens eines der folgenden umfassen: eine Zielmedienzugangssteuerungs- (MAC-) Adresse des Unicast-Datenrahmens, eine Quell-MAC-Adresse des Unicast-Datenrahmens, einen numerischen Wert, der durch eine Operation der Ziel-MAC-Adresse des Unicast-Datenrahmens und/oder der Quell-MAC-Adresse des Unicast-Datenrahmens unter Verwendung eines spezifischen Algorithmus, einer Port-ID eines Empfangsports des Unicast-Datenrahmens, einer Fluss-ID erhalten wird; und
wobei der erste vorgegebene Algorithmus umfasst:
Erhalten des Modulo der Pfadabbildungsinformationen unter Verwendung der Anzahl von Pfaden.

10. Vorrichtung nach einem der Ansprüche 7 bis 9, **dadurch gekennzeichnet, dass** sie ferner umfasst;
ein internes Parsermodul (708), das konfiguriert ist, um nach dem Parsen des TRILL-Anfangsblocks, wenn die Pfadabbildungsinformationen und/oder die Pfadabbildungsstrategie nicht ermittelt werden, das Parsen eines internen Rahmenanfangsblocks fortzusetzen, um Pfadabbildungsschlüsselinformationen zu erhalten;
ein Pfadgewinnungsmodul (710), das konfiguriert ist, um eine ECMP-(Equivalent Cost Multiple Path) Weiterleitungstabelle gemäß Egress-Informationen in dem TRILL-Anfangsblock abzufragen, um alle verfügbaren Pfade zu dem Egress zu erhalten;
ein Pfadabbildungsmodul (712), das konfiguriert ist, um die Pfadabbildungsschlüsselinformationen durch einen zweiten vorgegebenen Algorithmus auf einen der verfügbaren Pfade abzubilden.

11. Vorrichtung nach Anspruch 10, **dadurch gekennzeichnet, dass**
die Pfadabbildungsschlüsselinformationen wenigstens eines der Folgenden umfassen: eine Zwischenschicht-Quell-MAC-Adresse, eine Zwischenschicht-Ziel-MAC-Adresse, Informationen über das virtuelle lokale Netzwerk (VLAN), eine Empfangsschnittstellenport-ID; und
der zweite vorgegebene Algorithmus umfasst:
Hashen einer Zwischenschicht-MAC-Adresse und Erhalten des Modulo des Hash-Ergebnisses unter Verwendung der Anzahl von Pfaden.

12. Vorrichtung nach Anspruch 11, **dadurch gekennzeichnet, dass** sie ferner umfasst:
ein Pfadeinordnungsmodul (714), das konfiguriert ist, um alle verfügbaren Pfade gemäß einer vorgegebenen Regel einzuordnen, wobei die vorgegebene Regel umfasst: eine fallende oder steigende Reihenfolge einer MAC-Adresse eines nächsten Hops bzw. Knotens.

## Revendications

1. Procédé de transmission d'une trame de données à destination unique, **caractérisé en ce que** :
dans un réseau à interconnexion transparente de lots de liaisons (TRILL), un pont routeur d'entrée réalise une encapsulation TRILL pour une trame de données à destination unique, ajoute des informations de mappage de chemins et/ou une politique de mappage de chemins à un en-tête TRILL et transmet la trame de données à destination unique encapsulée ;
durant une procédure de transmission, le pont routeur d'entrée analyse l'en-tête TRILL et implémente un mappage de chemins d'acheminement selon les informations de mappage de chemins par le biais d'un premier algorithme prédéterminé ou directement selon la politique de mappage de chemins ; et
le pont routeur d'entrée encapsule et achemine la trame de données à destination unique à l'aide d'un chemin d'acheminement obtenu par le biais du mappage des chemins d'acheminement.

2. Procédé selon la revendication 1, **caractérisé en ce que** les informations de mappage de chemins et/ou la politique de mappage de chemins sont ajoutées à un champ d'options de l'en-tête TRILL et encapsulées en tant qu'une ou plusieurs options de saut par saut ayant des attributs non critiques selon un format de type, longueur et valeur (TLV).

3. Procédé selon la revendication 2, **caractérisé en ce que**
les informations de mappage de chemins comprennent au moins une des informations suivantes : une adresse de contrôle d'accès au support physique (MAC) de destination de la trame de données à destination unique, une adresse MAC de source de la trame de données à destination unique, une valeur numérique obtenue par traitement de l'adresse MAC de destination de la trame de données à destination unique et/ou de l'adresse MAC de source de la trame de données à destination unique à l'aide d'un algorithme spécifique, un identifiant de port d'un port de réception de la trame de données à destination unique, un identifiant de flux ; et
le premier algorithme prédéterminé comprend :
l'obtention d'un module des informations de mappage de chemins à l'aide du nombre de chemins.

4. Procédé selon l'une quelconque des revendications 1 à 3, **caractérisé en ce que**, après que le pont routeur d'entrée a analysé l'en-tête TRILL, si les informations de mappage de chemins et/ou la politique de mappage de chemins ne sont pas trouvées, le procédé comprend en outre :
le pont routeur d'entrée continue d'analyser un en-tête de trame interne afin d'obtenir des informations clé de mappage de chemins ;
le pont routeur d'entrée interroge une table d'acheminement par des chemins multiples de coûts équivalents (ECMP) selon des informations du pont routeur de sortie dans l'en-tête TRILL afin d'obtenir tous les chemins disponibles vers la sortie ;
le pont routeur d'entrée mappe les informations clés de mappage de chemins à un des chemins disponibles par le biais d'un second algorithme prédéterminé ; et
le pont routeur d'entrée encapsule et achemine la trame de données à destination unique à l'aide d'un chemin d'acheminement obtenu par le biais du mappage.

5. Procédé selon la revendication 4, **caractérisé en ce que**
les informations clés de mappage de chemins comprennent au moins une des informations suivantes : une adresse MAC de source de couche interne, une adresse MAC de destination de couche interne, des informations de réseau local virtuel (VLAN), un identifiant de port d'interface de réception ; et
le second algorithme prédéterminé comprend : le hachage d'une adresse MAC de couche interne et l'obtention d'un module du résultat de hachage à l'aide du nombre de chemins.

6. Procédé selon la revendication 5, **caractérisé en ce que**, après que le pont routeur d'entrée a interrogé la table d'acheminement ECMP selon les informations de sortie dans l'en-tête TRILL pour obtenir tous les chemins disponibles vers la sortie, le procédé comprend en outre :
le pont routeur d'entrée classe tous les chemins disponibles selon une règle prédéterminée, la règle prédéterminée comprenant : un ordre descendant ou descendant d'une adresse MAC d'un prochain saut.

7. Pont routeur d'entrée à utiliser dans un réseau d'interconnexion transparente de lots de liaisons (TRILL) pour transmettre une trame de données à destination unique, **caractérisé en ce qu'**il comprend :
un module d'encapsulation et de transmission (702), configuré pour effectuer une encapsulation TRILL pour une trame de données à destination unique, ajouter des informations de mappage de chemins et/ou une politique de mappage de chemins à un en-tête TRILL et transmettre la trame de données à destination unique encapsulée ;
un module d'analyse TRILL (704), configuré pour, durant une procédure de transmission, analyser l'en-tête TRILL et implémenter un mappage de chemins d'acheminement selon les informations de mappage de chemins par le biais d'un premier algorithme prédéterminé ou directement selon la politique de mappage de chemins ; et
un module d'encapsulation et d'acheminement (706), configuré pour encapsuler et acheminer la trame de données à destination unique à l'aide d'un chemin d'acheminement obtenu par le biais du mappage.

8. Appareil selon la revendication 7, **caractérisé en ce que** le module d'encapsulation et de transmission (702) est en outre configuré pour ajouter les informations de mappage de chemins et/ou la politique de mappage de chemins dans un champ d'options de l'en-tête TRILL et encapsuler les informations de mappage de chemins et/ou la politique de mappage de chemins en tant qu'une ou plusieurs options de saut par saut ayant des attributs non critiques selon un format de type, longueur et valeur (TLV).

9. Appareil selon la revendication 8, **caractérisé en ce que**
les informations de mappage de chemins comprennent au moins une des informations suivantes : une adresse de contrôle d'accès au support physique (MAC) de destination de la trame de données à destination unique, une adresse MAC de source de la trame de données à destination unique, une valeur numérique obtenue par traitement de l'adresse MAC de destination de la trame de données à destination unique et/ou de l'adresse MAC de source de la trame de données à destination unique à l'aide d'un algorithme spécifique, un identifiant de port d'un port de réception de la trame de données à destination unique, un identifiant de flux ; et
le premier algorithme prédéterminé comprend :
l'obtention d'un module des informations de mappage de chemins à l'aide du nombre de chemins.

10. Appareil selon l'une quelconque des revendications 7 à 9, **caractérisé en ce qu'**il comprend en outre :
un module d'analyse interne (708), configuré pour, après l'analyse de l'en-tête TRILL, si les informations de mappage de chemins et/ou la politique de mappage de chemins ne sont pas trouvées, continuer d'analyser un en-tête de trame interne afin d'obtenir des informations clés de mappage de chemin ;
un module d'obtention de chemin (710), configuré pour interroger une table d'acheminement par des chemins multiples de coûts équivalents (ECMP) selon des informations du pont routeur de sortie dans l'en-tête TRILL afin d'obtenir tous les chemins disponibles vers la sortie ; et
un module de mappage de chemins (712), configuré pour mapper les informations clés de mappage de chemins à un des chemins disponibles par le biais d'un second algorithme prédéterminé.

11. Appareil selon la revendication 10, **caractérisé en ce que**
les informations clés de mappage de chemins comprennent au moins une des informations suivantes : une adresse MAC de source de couche interne, une adresse MAC de destination de couche interne, des informations de réseau local virtuel (VLAN), un identifiant de port d'interface de réception ; et
le second algorithme prédéterminé comprend : le hachage d'une adresse MAC de couche interne et l'obtention d'un module du résultat de hachage à l'aide du nombre de chemins.

12. Appareil selon la revendication 11, **caractérisé en ce qu'**il comprend en outre :
un module de classement de chemins (714), configuré pour classer tous les chemins disponibles selon une règle prédéterminée, la règle prédéterminée comprenant : un ordre descendant ou descendant d'une adresse MAC d'un prochain saut.
